# EUROPÄISCHE PATENTSCHRIFT

(11) **EP 2 978 992 B1**
(45) Veröffentlichungstag und Bekanntmachung des Hinweises auf die Patenterteilung: **15.11.2017**
(21) Anmeldenummer: 13721778.2
(22) Anmeldetag: 13.05.2013
(51) Int. Cl.: F16F 9/02, A47B 9/10

(54) **EINSTELLBARE GASDRUCKFEDER, HÖHENVERSTELLBARE SÄULE MIT GASDRUCKFEDER UND MÖBEL MIT HÖHENVERSTELLBARER SÄULE**
ADJUSTABLE GAS-PRESSURE SPRING, HEIGHT-ADJUSTABLE PILLAR HAVING A GAS-PRESSURE SPRING AND FURNITURE PIECE HAVING A HEIGHT-ADJUSTABLE PILLAR
RESSORT À GAZ RÉGLABLE, COLONNE RÉGLABLE EN HAUTEUR POURVUE D'UN RESSORT À GAZ ET MEUBLE POURVU D'UNE COLONNE RÉGLABLE EN HAUTEUR

(43) Veröffentlichungstag der Anmeldung: 03.02.2016
(73) Patentinhaber: Kesseböhmer Produktions GmbH & Co. KG, 73235 Weilheim/Teck (DE)
(72) Erfinder: HANSEN, Melf, 75053 Gondelsheim (DE)
(74) Vertreter: Prüfer & Partner mbB Patentanwälte · Rechtsanwälte
(86) Internationale Anmeldenummer: PCT/EP2013/059804
(87) Internationale Veröffentlichungsnummer: WO 2014/183775

(56) Entgegenhaltungen:
- EP-A1- 2 250 925
- EP-A2- 1 923 594
- DE-A1- 4 311 625
- DE-A1- 19 959 512
- DE-U1- 20 307 373
- US-A- 1 590 296
- US-A- 3 593 980
- US-A- 5 379 980
- US-A- 5 413 316
- US-B1- 8 210 109

## Beschreibung

Die Erfindung betrifft eine Gasdruckfeder, eine verstellbare Tischsäule mit einer Gasdruckfeder sowie ein verstellbares Möbelstück, insbesondere einen Tisch, mit einer verstellbaren Säule.

Möbelstücke, wie beispielsweise Bürotische, Schreibtische oder Werkbänke etc. werden häufig, beispielsweise aus arbeitsökonomischen Gründen, in ihrer Höhe verstellbar vorgesehen. Dabei existieren höhenverstellbare Tische, die beispielsweise mehrteilige Tischsäulen aufweisen. Derartige Tischsäulen sind in der Regel so ausgestaltet, dass ein Säulenelement der Tischsäule in eine weitere Säule einschiebbar ausgestaltet ist. Natürlich sind auch andere Konstruktionen denkbar, gemäß denen die einzelnen Säulenelemente aneinander vorbei oder ineinander bewegt werden, die von der vorliegenden Erfindung ebenfalls abgedeckt sind.

Die Höhenverstellung der Möbel, insbesondere Tische, kann dabei sowohl manuell als auch motorisch erfolgen. Der jeweilige Kraftaufwand, der zum Verstellen in einer vertikalen Richtung aufwärts, also zum Erhöhen, aufgewendet werden muss, soll dabei möglichst reduziert werden. Dazu werden häufig Elemente wie beispielsweise Federelemente, insbesondere Gasdruckfedern, in den Säulen vorgesehen, die einer Gewichtskraft auf die Säule entgegenwirken.

Diese Federn, insbesondere Gasdruckfedern, weisen eine bestimmte, primär durch deren Innendruck definierte, Federkraft auf. Diese Federkraft ist dabei auf das Gewicht beispielsweise einer Tischplatte und der darauf befindlichen Komponenten oder Anbauten abgestimmt. Dabei muss jedoch im Voraus definiert werden, welche Gewichtsbelastungen auf der Säule und folglich auf der Feder lasten sollen. Dies erfordert eine individuelle Herstellung verschiedener Tischsäulen. So muss eine Tischsäule einer Werkbank in der Regel eine höhere Gewichtsbelastung ertragen als ein gewöhnlicher Bürotisch. Eine solche individuelle Herstellung der Federn und Tischsäulen erfordert jedoch einen größeren Aufwand bei der Herstellung, Montage und Lagerhaltung.

Aus dem Stand der Technik sind höhenverstellbare Tische mit Gasdruckfeder aus den Dokumenten DE 203 07 373 U1 und US 8 210 109 B1 bekannt. Des Weiteren ist aus US 1 590 296 A eine pneumatisch höhenverstellbare Vorrichtung, und aus US 3 593 980 A eine pneumatische Vorrichtung zum Halten eines vorgegebenen Höhenlevels bekannt. Darüber hinaus ist aus US 5 379 980 A eine pneumatische Schwingungsentkopplung, und aus US 5 413 316 A ein einstellbarer Luftfederzylinder bekannt.

Es ist eine Aufgabe der vorliegenden Erfindung, einen höhenverstellbaren Tisch zur Verfügung zu stellen, der obiges Problem lösen kann und einen vereinfachten Herstellungsprozess ermöglicht.

Diese Aufgabe wird erfindungsgemäß gelöst mittels eines höhenverstellbaren Tischs gemäß Anspruch 1. Vorteilhafte Weiterbildungen der Erfindung sind Gegenstand der Unteransprüche.

Eine erfindungsgemäße einstellbare Gasdruckfeder weist einen Gasfederabschnitt, einen Gasspeicher und ein Verbindungsmittel auf. Das Verbindungsmittel verbindet dabei den Gasspeicher und den Gasfederabschnitt fluidisch miteinander. Das bedeutet, ein Fluid, also ein Gas und/oder eine Flüssigkeit, ist zwischen dem Gasspeicher und dem Gasfederabschnitt der Gasdruckfeder austauschbar. Dabei ist die Federkraft des Gasfederabschnitts durch einen Druckausgleich mit dem Gasspeicher bzw. auch mit dem Umgebungsdruck einstellbar. Insbesondere führt eine Erhöhung des Drucks in dem Gasfederabschnitt zu einer Erhöhung der Federkraft für höhere Belastungen und eine Druckreduzierung, beispielsweise auf den Umgebungsdruck, führt zu einer Reduzierung der Federkraft und somit zu einem verringerten Gewichtsausgleich durch die Gasdruckfeder. Auf diese Weise kann die Federkraft der Gasruckfeder für jeden Anwendungsbereich individuell eingestellt werden, ohne dass verschiedene Komponenten verbaut werden müssen. Dies kann beim Herstellungsprozess einen verbesserten Produktionsablauf, bzw. Montageablauf am Einsatzort erlauben.

Zudem kann der Gasspeicher ein Einstellmittel aufweisen, durch welches ein Einstellen des Drucks in dem Gasspeicher ermöglicht ist. Zudem kann der Gasspeicher auch ein externer Gasspeicher, beispielsweise eine externe Gasdruckflasche sein, die über entsprechende Verbindungsmittel wie beispielsweise Ventile reversibel mit dem Gasfederabschnitt der Gasdruckfeder verbindbar ist. Alternativ ist in einer Ausführungsform das Einstellmittel des Gasspeichers ein Kolben, der in den Gasspeicher einbringbar bzw. aus dem Gasspeicher herausführbar vorgesehen ist. Das Verstellen des Kolbens kann wie bei einem Kolbenzylinder durch einfaches Einschieben bzw. Herausziehen des Kolbens in bzw. aus dem Gasspeicher erfolgen. Alternativ kann der Kolben ein Gewinde aufweisen, das in ein Muttergewinde in dem Gasspeicher, insbesondere in dem Gehäuse des Gasspeichers, eingreift und so in den Gasspeicher einschraubbar bzw. aus dem Gasspeicher herausschraubbar ist.

Durch das Einstellmittel bzw. das Anschließen einer externen Gasflasche als Gasspeicher ist es jederzeit möglich, die Federkraft der Gasdruckfeder zu regulieren, nachzustellen oder voreinzustellen.

Insbesondere kann auf diese Weise nach der Montage werkseitig ein Druck von Seiten des Herstellers eingestellt werden oder, insbesondere unter Verwendung des Einstellmittels in Form eines einbringbaren Kolbens auf Kundenseite erfolgen. Das Einstellmittel kann dabei insbesondere auch erlauben, mit einer Kurbel, einem Schraubendreher, einem Akkuschrauber oder einem anderen Schraub- bzw. Eingriffsmittel einzugreifen. Das kann eine Bedienung des Einstellmittels durch den Kunden, insbesondere den Benutzer des Möbelstücks vereinfachen.

Es ist natürlich zudem denkbar, dass die Verstellung des Einstellmittels auch motorgetrieben sein kann, so dass dies von dem Benutzer des Möbelstücks schnell und zuverlässig regulierbar sein kann. So kann auf schwankende Gewichtsbelastungen des Möbelstücks schnell und einfach reagiert werden, ohne dass Komponenten des Tisches überlastet werden, oder eine Höhenverstellung des Tisches bzw. anderen Möbelstücks nach oben zu schwer ist oder nach unten zu schnell erfolgt, mit der Gefahr von Beschädigungen am Tisch und benachbarten Komponenten.

Das Verbindungsmittel zwischen dem Gasfederabschnitt und dem Gasspeicher ist dabei vorteilhafterweise ein Schlauchelement, insbesondere ein flexibles Schlauchelement, so dass das Verbindungsmittel auch bei einer Höhenverstellung zuverlässig funktional bleibt.

Es ist insbesondere auch denkbar, dass die Verstellung des Gasdrucks in dem Gasfederabschnitt und/oder in dem Gasspeicher auf verschiedenste Weise verändert werden kann, beispielsweise pneumatisch, hydraulisch oder mechanisch.

Das Einstellmittel kann vorteilhafterweise zur besseren Reproduzierbarkeit auch eine Kolbenstange sein, die in dem Gasspeicher oder dem Gehäuse des Gasspeichers mittels einer Linearführung geführt ist. Eine derartige Führung der Kolbenstange kann eine bessere Einstellung des Gasspeichers erlauben.

Weiterhin kann ein Stellkraftmittel vorgesehen sein, das eine Bewegung des Einstellmittels, insbesondere eine Bewegung des Einstellmittels, welche eine Druckerhöhung in dem Gasspeicher bewirkt, unterstützt. Dies kann eine Einstellung des Drucks in dem Gasspeicher und somit eine Einstellung der Federkraft der Gasdruckfeder vereinfachen.

Dieses Stellkraftmittel kann in einer Weiterbildung auch ein Federmittel aufweisen, beispielsweise eine Drehfeder oder eine Linearfeder, beispielsweise abhängig davon, welche Ausführung des Einstellmittels bevorzugt ist.

In einer Ausführungsform der vorliegenden Erfindung, in der der Gasspeicher trennbar von dem Federabschnitt der Gasdruckfeder ausgebildet ist, kann der Gasfederabschnitt ein Ventilelement aufweisen. So kann ein einfaches Anschließen des Gasspeichers bewerkstelligt werden, ohne einen Funktionsverlust der Gasfeder, wenn ein Gasspeicher nicht angeschlossen ist.

Eine einstellbare Gasdruckfeder kann auch ein Rastmittel aufweisen. Das Rastmittel der Gasdruckfeder kann dabei in wenigstens einer Position blockierbar sein. Das heißt, die Gasdruckfeder kann in dieser Position festgehalten werden, was eine Blockierung der Höhenverstellung des Tisches bewirken kann. Vorzugsweise kann das Rastmittel auch in einer Mehrzahl an Positionen, insbesondere stufenlos in beliebigen bzw. in allen Positionen, blockierbar sein.

So kann eine Möglichkeit der Arretierung des Tisches zur Verfügung gestellt werden. Sehr häufig werden verrastbare Gasdruckfedern, die beispielsweise mittels eines am Tisch befestigten Griffes gelöst werden können, eingesetzt.

Erfindungsgemäß wird zudem eine höhenverstellbare Säule zur Verfügung gestellt, insbesondere eine Tischsäule, die wenigstens zwei Säulenelemente aufweist, die hier als unteres Säulenelement und oberes Säulenelement bezeichnet sind. Die Begriffe "unten" und "oben" beziehen sich auf eine vertikale Richtung, wobei "unten" stets die Richtung bezeichnet, in der die Säule auf einem Untergrund ruht und "oben" bedeutet eine Richtung, in der eine Gewichtsbelastung auf der Säule ruht, also im Falle einer Tischsäule in der Regel eine Tischplatte oder ähnliches. Diese Säulenelemente sind dabei erfindungsgemäß bewegbar relativ zueinander und es ist zudem ein Gasdruckfederabschnitt so angeordnet, dass die Federkraft der Gasdruckfeder einer Gewichtsbelastung auf die Tischsäule, also von oben, entgegengerichtet ist. Der Gasdruckfederabschnitt ist also vorzugsweise in einer vertikalen Richtung ausgerichtet. So kann durch Einstellen der Federkraft der Gasdruckfeder die auf der Säule ruhende Gewichtsbelastung ausgeglichen werden.

Die Gasdruckfeder kann entweder ganz oder zumindest teilweise in einem der Säulenelemente der Säule vorgesehen sein. Es ist auch denkbar, dass die Gasdruckfeder nur teilweise in einem der Säulenelemente vorgesehen ist, beispielsweise nur der Gasdruckfederabschnitt, nicht jedoch der Gasspeicher. Die Gasdruckfeder oder zumindest die in einem der Säulenelemente integrierten Bestandteile der Gasdruckfeder sind vorzugsweise in einem inneren Säulenelement vorgesehen, um eine Bewegung der Säulenelemente relativ zueinander nicht zu beeinflussen. Ein inneres Säulenelement ist dabei ein Säulenelement, das in einer radialen Richtung ausgehend von der Längsachse der Säule nach außen am zentrumsnächsten ist.

Es ist zudem denkbar, dass die Säule eine zwei oder mehrstufige Säule ist, dass also mehr als zwei Säulenelemente vorgesehen sind. Das Prinzip der Erfindung ist auf derartige mehrstufige Säulen analog anwendbar.

Die Säulen können dabei in einer Weiterbildung der Erfindung motorbetriebene Säulen sein, wobei ein Motor die Höhenverstellung der Säule vornimmt. Alternativ kann die Säule auch handbetrieben in der Höhe verstellbar sein.

Ein erfindungsgemäßes Möbelstück ist beispielsweise ein höhenverstellbarer Tisch. Ein derartiger Tisch weist wenigstens eine Säule mit einer Gasdruckfeder auf, wie sie oben beschreiben ist, sowie eine Tischplatte, die oberhalb der Säule angeordnet ist.

Es ist in bestimmten Ausführungsformen denkbar, dass eine Mehrzahl an höhenverstellbaren Säulen in dem Tisch vorgesehen sind, wobei wenigstens eine der Säulen, vorzugsweise mehrere Säulen und insbesondere alle Säulen, zumindest einen Gasdruckfederabschnitt einer Gasdruckfeder aufweisen. Dabei kann auch neben einer mit einstellbarer Gasdruckfeder vorgesehenen Tischsäule wenigstens eine Säule vorgesehen sein, die eine handelsübliche, nicht-einstellbare Gasdruckfeder aufweist. Die verschiedenen Säulen können dabei mit einem Synchronisierungsmittel verbunden sein. So kann ein unterschiedlicher Gewichtsausgleich durch die verschiedenen Säulen ausgeglichen werden und eine Verstellbarkeit und Zuverlässigkeit des Tisches kann verbessert bzw. erhöht werden.

Zudem ist in einer Weiterbildung der Erfindung ein Gasspeicher vorgesehen, der mit einer Mehrzahl von Gasdruckfederabschnitten verbunden ist, oder, vorzugsweise, auch mit allen Gasdruckfederabschnitten erfindungsgemäßer Gasdruckfedern, verbunden sein kann. Die Verbindung zwischen Gasspeicher und Gasdruckfederabschnitten ist dabei ebenfalls als eine fluidische Verbindung vorgesehen, im allgemeinsten Sinne des Wortes.

Der Gasspeicher kann vorteilhafterweise an dem Tischrahmen oder an anderen Anbauteilen des Tisches vorgesehen sein oder auch darin integriert ausgebildet sein, oder beides.

In einer weiteren Weiterbildung der Erfindung weist der Tisch zudem ein Synchronisierungsmittel, insbesondere ein Bandsynchronisierungsmittel, auf, das die Höhenverstellung des Tisches durch Synchronisieren einer Mehrzahl von höhenverstellbaren Tischsäulen vereinheitlicht. Dies kann eine leichtere Verstellung des Tisches ermöglichen.

Das Synchonisierungsmittel kann zwischen den Einzelsäulen zum einen wegen der gesteuerten Bewegung wie aber auch zur Übertragung der nur einseitig angreifenden Gasfederkräfte eingesetzt werden. Dies eröffnet unter anderem die Möglichkeit, eine zweite Zusatzgasdruckfeder in eine zweite, bis dahin leere, Säule zu verbauen. Dies kann insbesondere bei hohen Tischplattengewichten angewendet werden. So kann die Zusatzgasfeder oder auch die verrastbare Gasdruckfeder erfindungsgemäß einstellbar vorgesehen werden. Dies kann, im Rahmen der Belastungsgrenzen der einzelnen Komponenten, zu Kostenersparnissen bei der Herstellung und beim Material führen.

Eine Synchronisierung kann insbesondere auch zwischen Säulen erfolgen, die nicht alle mit einer erfindungsgemäßen, einstellbaren Gasdruckfeder vorgesehen sind. So kann auch eine oder mehrere der Säulen keine Gasdruckfeder oder eine nicht-einstellbare Gasdruckfeder aufweisen. Auch können statt nicht-einstellbaren Gasdruckfedern auch andere Gewichtsausgleichsmittel in anderen Säulen vorgesehen sein, wie beispielsweise herkömmliche Spiralfedern oder anderes.

Zudem kann an einem erfindungsgemäßen Tisch und/oder an einer erfindungsgemäßen verstellbaren Säule gemäß einer Ausführungsform ein Gewichtsmesser und/oder ein Gewichtsindikator vorgesehen sein. So kann eine tatsächliche Gewichtsbelastung des Tisches bzw. der Tischsäule gemessen werden und/oder die Gewichtsbelastung dargestellt werden. Dies erlaubt eine Kontrolle der Einstellungen der Gasdruckfeder.

Weiterhin kann an dem Tisch und/oder an der verstellbaren Säule und/oder an der erfindungsgemäßen Gasdruckfeder, insbesondere an dem Gasdruckfederabschnitt, ein Indikator zum Anzeigen des Drucks in der Gasdruckfeder vorgesehen sein. Dieser Indikator kann auch so ausgebildet sein, dass er nicht einen Druck sondern den über den Druck eingestellten Gewichtsausgleich in einer anderen Einheit, beispielsweise Newton oder Kilogramm, etc, angibt.

Auch ist es denkbar, dass an dem Tisch der verstellbaren Säule und/oder der Gasdruckfeder ein Indikator vorgesehen ist, der sowohl eine tatsächliche Gewichtsbelastung des Tisches als auch des eingestellten Gewichtsausgleichs anzeigt. Dies kann insbesondere in einer gemeinsamen Anzeige erfolgen. Auch kann eine einfache Indikation erfolgen, indem ein erster Anzeigenzustand angezeigt wird, wenn die Gewichtsbelastung auf den Tisch bzw. auf die Säule den Gewichtsausgleichseinstellungen der Gasdruckfeder entspricht, wenn diese also ausreichend ähnlich sind.

"Ausreichend ähnlich" bedeutet in diesem Zusammenhang, dass die Gasfeder eine Einstellung hat, die einer Gewichtsbelastung des Tisches derart entgegenwirken kann, dass die Tischplatte im Falle des Verstellens nicht unkontrollierbar an Höhe verliert, beispielsweise, wenn eine Gewichtsbelastung auf der Platte zu hoch ist, oder eine unkontrollierbare Bewegung nach oben erfolgt, beispielsweise wenn eine Gewichtsbelastung auf der Platte zu gering ist und die Federkraft die Gewichtskraft deutlich überschreitet. Sollte eben keine derartige ausreichende Ähnlichkeit zwischen der eingestellten Gewichtsausgleichskraft und der tatsächlich wirkenden Gewichtskraft vorherrschen, kann ein zweiter Anzeigenzustand in dem Indikator realisiert sein, der auf diesen Umstand hinweist. Beispielsweise kann ein erster Zustand mit einer Farbe, beispielsweise grün, dargestellt werden, wenn die Gewichtsbelastung und die eingestellte Federkraft zueinander korrespondieren. Ein zweiter Zustand kann farbig, beispielsweise rot, signalisieren, dass die Gewichtsbelastung und die eingestellte Federkraft signifikant voneinander abweichen und eine Beschädigungs- oder Verletzungsgefahr besteht.

Ein nicht-beschränkendes Beispiel für eine ausreichende Übereinstimmung von voreingestelltem Gewichtsausgleich und tatsächlicher Belastung kann eine Übereinstimmung sein, die eine geringere Abweichung als 50%, vorzugsweise geringer als 30% insbesondere geringer als 20%, aufweist.

Natürlich kann in weiteren Ausführungsformen auch eine mehrstufige Anzeige erfolgen, beispielsweise zur Anzeige von Übergangsbereichen zwischen einer ausreichenden Übereinstimmung und zu großen Abweichungen der eingestellten Größe von der tatsächlichen Belastung.

Weiterhin kann in weiteren Ausführungsformen der vorliegenden Erfindung ein Sicherungsmittel an dem Tisch vorgesehen sein. Dies kann so ausgebildet sein, dass ein Verstellen der Säule nur möglich ist, wenn die Gewichtsausgleichseinstellung der Gasdruckfeder und die tatsächliche Gewichtsbelastung des Tisches ausreichend ähnlich sind. Dies kann die Gefahr von Fehlbenutzung oder Unachtsamkeit und somit eine Verletzungsgefahr und eine Beschädigungsgefahr reduzieren.

Weiterhin kann ein höhenverstellbarer Tisch ein Rastmittel aufweisen, das so ausgebildet ist, dass die Position der Tischplatte in einer vertikalen Richtung arretierbar ist. Das bedeutet, dass die Säule entweder in vorbestimmten Positionen oder in willkürlichen, stufenlosen Schritten verstellbar und in beliebiger Position feststellbar ist. Dieses Rastmittel und ein Sicherungsmittel wie oben beschrieben können unterschiedliche Elemente oder aber auch ein gleiches Element sein.

Vorteilhafterweise kann das Rastmittel mit dem Synchronisierungsmittel zum Synchronisieren der Säulenbewegung verbunden sein und kann dieses bei Bedarf arretieren. Dies kann im Falle einer Bandsynchronisierung mittels eines so genannten Bandschlosses erfolgen.

Das Rastmittel kann in einer Ausführungsform eine Gasdruckfeder aufweisen. Die Gasdruckfeder des Rastmittels kann des Weiteren in zumindest einer Position, vorzugsweise in einer Vielzahl von Positionen oder stufenlos in allen Positionen blockierbar sein. Zudem kann die Gasdruckfeder des Rastmittels ebenfalls mit einem Gasspeicher, beispielsweise auch dem Gasspeicher der verstellbaren Gasdruckfeder, einstellbar sein. Dabei kann die Gasdruckfeder auch derart eingestellt sein, dass das Rastmittel den Tisch nicht in einer Position festhält, sondern die Bewegung lediglich dämpft und nur bei Bedarf hemmt. Das Rastmittel kann dabei in einer Ausführungsform in einer der Tischsäulen, insbesondere in einer innenliegenden Säule, vorgesehen sein. So können die Vorteile der Erfindung verwirklicht werden, ohne ästhetisch Kompromisse eingehen zu müssen.

Das Rastmittel kann dabei insbesondere mit einer erfindungsgemäßen Gasdruckfeder gekoppelt sein, daran oder integral damit ausgebildet sein, oder auf die Gasdruckfeder wirken. Somit kann das Rastmittel des Tisches auch durch Verrasten der Gasdruckfeder oder eines Teils davon, insbesondere des Gasdruckfederabschnitts oder des Gasdruckfederkolbens, eine Blockierung bzw. Arretierung des Möbels bzw. einer erfindungsgemäßen Säule bewirken.

Bei einer Mehrzahl an Gasdruckfedern in einem erfindungsgemäßen Tisch, wobei wenigstens eine der Gasdruckfedern nicht über die erfindungsgemäße einstellbare Ausführung verfügt, kann ein Rastmittel alternativ oder zusätzlich an der nicht-einstellbaren Gasdruckfeder vorgesehen sein. Alternativ kann eine nicht-einstellbare Säule eine verrastbare Säule sein, ohne dass ein separates bzw. zusätzliches Rastmittel an dem Tisch vorgesehen ist.

Weitere Vorteile, Weiterbildungen sowie bevorzugte Ausführungsformen der Erfindung werden im Folgenden unter Bezugnahme auf die Figuren detaillierter beschrieben.

Dabei zeigt:
Figur 1 ein Prinzip einer einstellbaren Gasdruckfeder gemäß einer Ausführungsform der Erfindung.
Figur 2 eine Ausführungsform einer Tischsäule mit einer erfindungsgemäßen Gasdruckfeder.
Figur 3 einen Tisch mit erfindungsgemäßer Gasdruckfeder gemäß einer Ausführungsform der Erfindung;
Figur 4 eine Draufsicht des Tisches aus Figur 3; und
Figur 5 eine weitere Ausführungsform eines Tisches mit einer erfindungsgemäßen Gasdruckfeder.

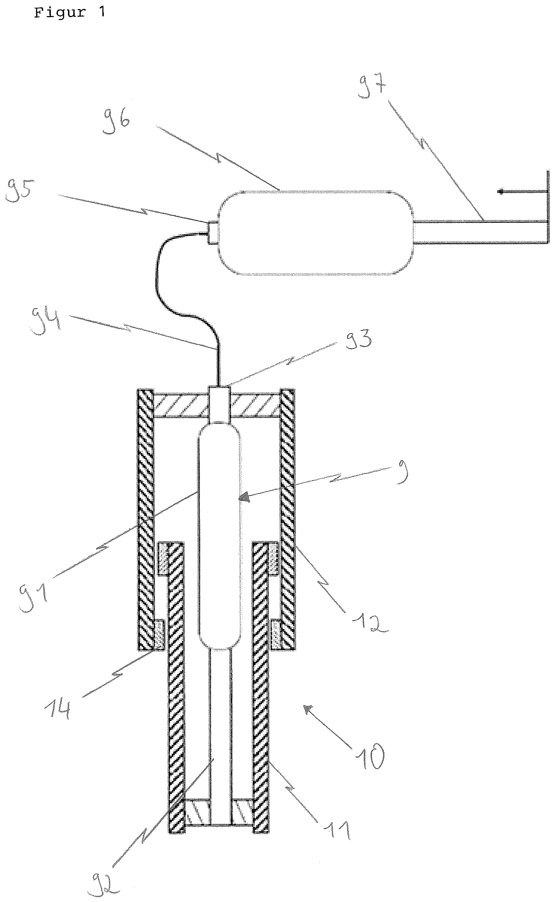

Fig. 1 zeigt eine einstellbare Gasdruckfeder 9 gemäß einer Ausführungsform der Erfindung. Die Gasdruckfeder 9 ist hier beispielhaft in einer Teleskopsäule 10 dargestellt, wie später noch näher beschrieben wird. Diese Teleskopsäule 10 weist ein unteres Säulenelement 11 und ein oberes Säulenelement 12 auf, wobei die Säulenelemente 11, 12 gegeneinander verschiebbar sind. Vorliegend ist das untere Säulenelement 11 so ausgebildet, dass dessen äußerer Umfang schmaler ist als der innere Umfang des oberen Säulenelements 12 und das untere Säulenelement somit in dem oberen Säulenelement 12 aufnehmbar ist. Zudem ist ein Anschlag 14 vorgesehen, der ein zu weites Ausfahren des unteren Säulenelements 11 aus dem oberen Säulenelement 12, bzw. anders herum, vermeidet. Auch kann die untere Säule größer ausgebildet sein als die obere Säule, so dass die untere Säule die obere Säule aufnehmen kann.

In den Säulenelementen 11, 12 ist entlang einer Mittelachse der Säulenelemente ein Gasdruckfederabschnitt hier in Form eines Zylinders 91 ausgebildet. An einem oberen Ende des Zylinders 91 ist ein Zylinderventil 93 ausgebildet. Der Zylinder 91 ist an einem oberen Ende des oberen Säulenelements 12 mit dem oberen Säulenelement 12 verbunden. An einem unteren Ende des Zylinders 91 erstreckt sich aus dem Zylinder 91 ein Kolben 92 in abwärtiger Richtung. Ein Ende des Kolbens 92 ist in dem Zylinder 91 aufgenommen. Das von dem Zylinder 91 abgewandte Ende des Kolbens 92 ist mit einem unteren Abschnitt des unteren Säulenelements 11 verbunden.

In alternativen Ausführungsformen kann die Anordnung des Gasfederabschnitts 91, 92 auch beispielsweise umgekehrt sein.

Sich von dem Zylinderventil 93 erstreckend ist ein Verbindungsmittel 94, das in der gezeigten Ausführungsform ein Schlauch, insbesondere ein Schlauch für Druckluft ist, ausgebildet. An dem von dem Zylinderventil 93 weg weisenden Ende des Verbindungsmittels 94 ist dieses mit einem weiteren Ventil 95 verbunden. Dieses Ventil 95 verbindet den Schlauch mit einem Gasspeicher 96. Bei geöffneten Ventilen 95, 93 sind somit der Gasspeicher 96 und der Zylinder 91 fluidisch miteinander verbunden.

Der Gasspeicher 96 ist wiederum zylinderartig ausgebildet und weist eine Kolbenstange 97 in der gezeigten Ausführungsform auf. Die Kolbenstange 97 ist in den Gasspeicher 96 einbringbar bzw. aus dem Gasspeicher 96 herausziehbar ausgebildet. Dem ZylinderKolben-Prinzip folgend ist ein Einbringen der Kolbenstange 97 mit einer Druckerhöhung in dem Gasspeicher in einem dem Ventil 95 benachbarten Bereich des Gasspeichers 96 verbunden. Analog erfolgt eine Druckreduzierung in dem Gasspeicher, wenn der Kolben herausgezogen bzw. heraus geschraubt wird.

In einer alternativen Ausführungsform kann anstelle der Kolbenstange auch ein Anschluss für ein weiteres externes Druckreservoir vorgesehen sein. Auch kann die Kolbenstange über ein Gewinde verfügen, welches mit einem Gewinde in dem Gasspeicher 96 korrespondiert, so dass die Kolbenstange eindrehbar in den Gasspeicher 96 ausgebildet ist.

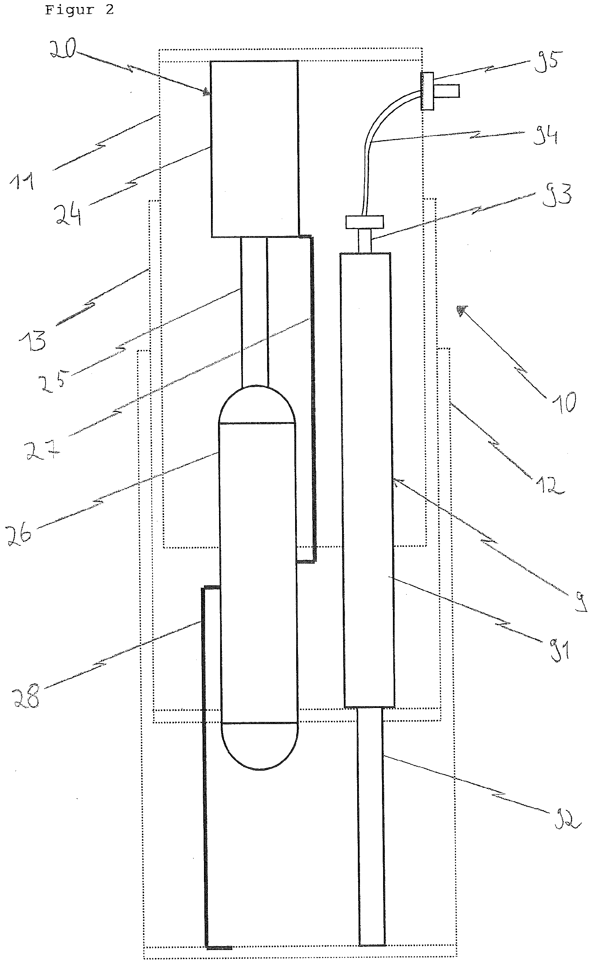

Fig. 2 zeigt eine weitere Ausführungsform der Gasdruckfeder in Verbindung mit einer Tischsäule 10. Die Tischsäule 10 weist in der gezeigten Ausführungsform drei Säulenelemente 11, 12, 13 auf, die teleskopartig ineinander einbringbar sind, wie bereits bezüglich Fig. 1 beschrieben ist. Die Anzahl der Säulen ist für den Erfindungsgedanken nicht relevant und es ist auch denkbar, dass mehr oder weniger Säulen vorgesehen sind, ohne sich von dem Erfindungsgedanken zu entfernen. Die Befestigung des Kolbens 92 des Druckfederabschnitts erfolgt analog zu Fig. 1 auf übliche Weise. Ebenso erfolgt eine Befestigung bzw. eine Kopplung des oberen Abschnitts des Gasdruckfederabschnitts.

In der gezeigten Ausführungsform nach Fig. 2 ist die verstellbare Säule 10 eine Antriebssäule mit mehreren, hier drei, Teleskopteilen 26, 27 und 28 sowie mit einer Verstelleinheit 20. Die Verstelleinheit 20 weist einen elektrischen Antriebsmotor 24 auf. Der Antriebsmotor 24 ist hier an einer Abschlussplatte, welche an einem oberen Ende der Säule 10 vorgesehen ist, angeordnet. Des Weiteren weist die Säule 10 eine Gewindespindel 25 auf, die an dem mittleren Teleskopteil 26 angeordnet ist und durch den Antriebsmotor 24 angetrieben wird. Die Gewindespindel 25 und das obere Teleskopteil 27 sind in einem ausgefahrenen Zustand der Säule zumindest teilweise auf Höhe der Innensäule 11 angeordnet.

Das mittlere Teleskopteil 26 schließt sich an das obere Teleskopteil 27 bzw. die Gewindespindel 25 an, wobei das mittlere Teleskopteil 26 derart angeordnet ist, dass es von den oberen und unteren Teleskopteilen 27 und 28 zumindest teilweise umgeben ist und entlang der Gewindespindel 25 parallel zu dem oberen Teleskopteil 27 verschoben werden kann. Das untere Teleskopteil 28 erstreckt sich bis zu der Unterseite des unteren Säulenelements 13 und kann dort durch geeignete Befestigungsmittel angebracht sein.

Ebenfalls an der Unterseite des unteren Säulenelements ist eine Gasdruckfeder 9 vorgesehen. Die Gasdruckfeder 9 weist dabei in der gezeigten Ausführungsform einen Zylinder 91 und einen Kolben 92 auf. Dabei ist ein Ende des Kolbens 92 an der Unterseite des unteren Säulenelements 11 befestigt, während das andere Ende in dem Zylinder 91 aufgenommen ist. Eine Oberseite des Zylinders 91 ist zudem mit dem mittleren Säulenelement 13 verbunden. In anderen Ausführungsformen kann die Säule natürlich auch nur zwei Säulenelemente aufweisen und der Zylinder wäre in diesem Fall mit dem oberen Säulenelement verbunden. Entsprechend können auch mehrere Säulenelemente vorgesehen sein.

In einer weiteren alternativen Ausführungsform, kann eine Unterseite des Zylinders 91 auch an der Oberseite des oberen Säulenelements 12, und die Oberseite des Kolbens 92 an der Unterseite des mittleren bzw. des unteren Säulenelements 11, 13 befestigt sein.

Die Anordnung der Gasdruckfeder 90 erfolgt also vorzugsweise so, dass die Kraft zwischen zwei Teleskopsäulenelementen übertragen wird, so dass die Hubleistung des Antriebsmotors unterstützt wird, bzw. einer Gewichtbelastung auf die Säule von oben entgegengewirkt wird.

Das Ventil 93, welches an dem Gasdruckfederabschnitt angeordnet ist, ist wiederum über das Verbindungsmittel 94 mit einem weiteren Ventil 95 verbunden. Das Ventil 95 erstreckt sich dabei aus dem Säuleninneren nach derart außen, dass eine Einfuhrbewegung der Teleskopsäulen nicht gehemmt ist, und gleichzeitig ein Verbinden des Ventils mit einem Gasspeicher 96 (in Fig. 2 nicht gezeigt) ermöglicht ist. Dazu ist vorliegend eine Öffnung in der Innensäule 11, also der oberen Säule, ausgebildet. Durch diese Öffnung erstreckt sich das Ventil 95 in radialer Richtung nach außen aus der Säule 10 heraus.

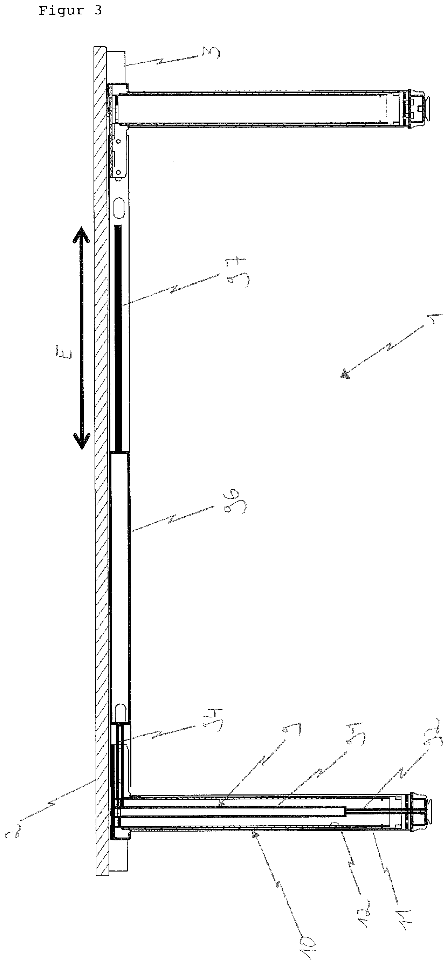

Fig. 3 zeigt ein Ausführungsbeispiel eines erfindungsgemäßen Tisches mit einer Tischsäule, welche eine erfindungsgemäße Gasdruckfeder-Dämpfung vorsieht. Der Tisch 1 weist eine Mehrzahl an Tischsäulen 10 auf, insbesondere vier Säulen 10, wobei in der Seitenansicht nur zwei Säulen 10 sichtbar sind. Die Säulen 10 sind mit einem Tischrahmen 3 verbunden. Oberhalb der Säulen 10 und des Tischrahmens 3 ist eine Tischplatte 2 angeordnet. In einer der Tischsäulen 10 ist ein Gasfederabschnitt 91, 92 einer erfindungsgemäßen Gasdruckfeder 9 angeordnet. Diese Anordnung kann beispielsweise erfolgen wie in Fig. 1 gezeigt ist, oder die Säule gemäß Fig. 3 kann motorgetrieben sein, wie in der Ausführungsform gemäß Fig. 2 dargestellt ist. An dem Tischrahmen 3 ist der Gasspeicher 96 vorgesehen. Zudem ist das Verbindungsmittel 94 entlang des Rahmens 3 von dem Gasspeicher zu dem Zylinder 91 des Gasdruckfederabschnitts ausgebildet.

Der Kolben 97 ist entlang eines Einstellungsbereichs E, in Fig. 3 gekennzeichnet durch den Doppelpfeil, in axialer Richtung entlang der Erstreckung des Gasspeichers 96, längs des Rahmens 3 bewegbar. So kann eine Einstellung des Drucks in dem Gasspeicher 96 durch Verändern der Position bzw. der Eindringtiefe des Kolbens 97 relativ zu dem Gasspeicher erfolgen.

In alternativen Ausführungsformen kann auch mehr als eine Säule einen Gasfederabschnitt 91, 92 aufweisen. Dabei kann ein Gasspeicher entweder für jeden Gasfederabschnitt vorgesehen sein, oder ein Gasspeicher ist für mehr als einen Gasfederabschnitt, insbesondere für alle Gasfederabschnitte der Tischsäulen, als Gasspeicher 96 vorgesehen.

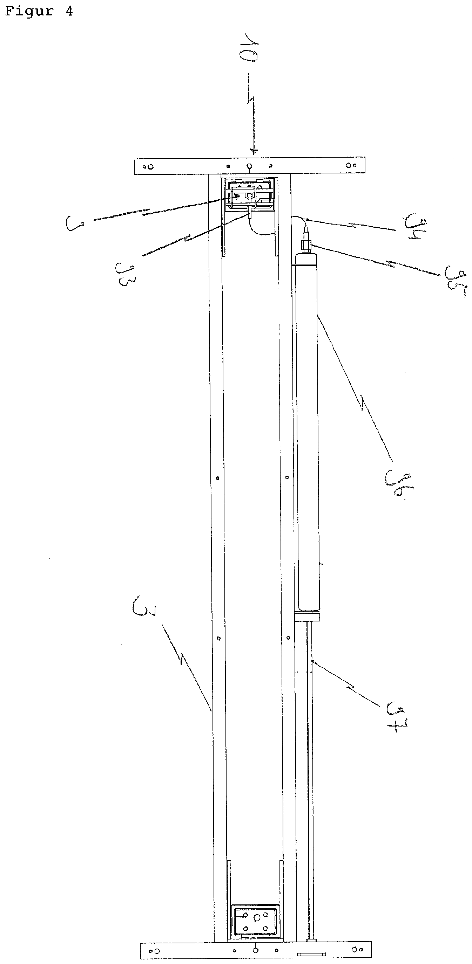

Fig. 4 zeigt eine Draufsicht auf den Tisch gemäß der in Fig. 3 gezeigten Ausführungsform, wobei eine Befestigung des Gasspeichers 96 und der Kolbenstange 97 entlang des Rahmens 3 zu erkennen ist. Der Gasspeicher 96 ist dabei unterhalb einer Tischplatte ausgebildet, die von dem Rahmen in zusammengebautem zustand getragen wird.

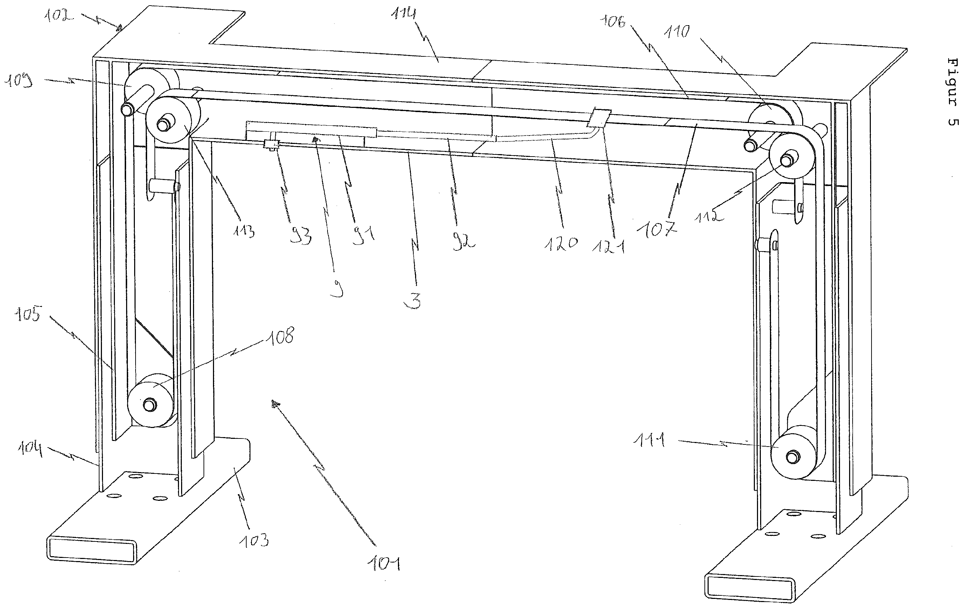

Fig. 5 zeigt eine alternative Ausführungsform eines höhenverstellbaren Tisches gemäß der vorliegenden Erfindung. Dabei ist ein Tisch 101 mit einem Synchronisierungsmittel, hier einer Bandsynchronisierung, ausgebildet.

Der höhenverstellbare Tisch 101 weist ein Tischplattenhaltebauteil 102 mit umgekehrter U-Form und zwei Fußbauteile 103 in umgekehrter T-Form auf. Die Fußbauteile 103 umfassen ein vertikales Element 104, welches im Wesentlichen dem unteren Säulenelement der zuvor beschriebenen Ausführungsformen entspricht, und das als Hohlprofil einen Raum umschließt und nach oben offen ist. Das Tischplattenhaltebauteil 102 weist zwei vertikale Träger 105 auf, die von oben in die vertikalen Elemente 104 eingesetzt sind. Die vertikalen Elemente 104 und die vertikalen Träger 105 sind so miteinander verbunden, dass eine Relativbewegung der vertikalen Elemente 104 zu den vertikalen Trägern 105 in vertikaler Richtung möglich ist.

Ferner weist das höhenverstellbare Tischgestell zwei Stahlbänder 106 und 107 auf, die über Umlenkrollen 108, 109 und 110 bzw. 111, 112 und 113 geführt werden.

Wie weiter aus Figur 5 ersichtlich, sind die Umlenkrollen 108 und 111 drehbar am unteren Ende der vertikalen Träger 105 angeordnet. Die Umlenkrollen 109, 110, 112 und 113 sind drehbar an einer Quertraverse 114 des Tischplattenhaltebauteils 102 befestigt. Das Stahlband 106 ist an einem oberen Ende des einen vertikalen Elements 104 befestigt, wird vertikal zur Rolle 108 herabgeführt, um die Rolle 108 herum umgelenkt, zur Rolle 109 vertikal heraufgeführt, um Rolle 109 herum umgelenkt, horizontal zur Rolle 110 geführt, um Rolle 110 herum umgelenkt, vertikal zu einem oberen Ende des anderen vertikalen Elements 104 geführt und dort befestigt. Das Stahlband 107 ist in gleicher Weise aber gespiegelt um die weiteren Umlenkrollen 111, 112 und 113 geführt und an seinen Enden befestigt.

In der Ausführungsform gemäß Fig. 5 ist zwischen einer Unterseite des Rahmens 3 und dem Tischplattenbauteil 102 bzw. der Quertraverse 114 der Gasspeicher 96 ausgebildet. Der Gasdruckfederabschnitt 91 ist über den Kolben 92 mit einem Verbindungselement 120 verbunden. Das Verbindungselement wiederum ist mit einem Befestigungselement 121 verbunden. Das Befestigungselement 121 ist vorliegend als ein Bandschloss ausgebildet, das mit dem Band bzw. einem der Bänder zum Synchronisieren der Tischeinstellung verbunden ist. Auf diese Weise kann eine Höhenverstellung in einem Tisch mit derartiger Bandsynchronisierung durch Einstellen der Federkraft der Gasdruckfeder 9 unterstützt werden oder, im Extremfall, eine Verstellung gehemmt werden.

Wie zuvor in Verbindung mit der Säule gemäß der Ausführungsform nach Fig. 2 beschrieben, ist der Gasdruckfederabschnitt über ein Ventil 93 mit einem Gasspeicher verbindbar, der in der dargstellten Ausführungsform nicht permanent an dem Tisch 101 vorgesehen ist. Dies kann jedoch in alternativen Ausführungen selbstverständlich der Fall sein.

Im Folgenden soll kurz die Funktionsweise der erfindungsgemäßen Gasfeder beispielhaft bei Verwendung in einer Tischsäule bzw. einem Tisch erläutert werden. Wie bereits erwähnt dient eine Gasdruckfeder in einer Tischsäule zum Gewichtsausgleich des Gewichts, das auf der Säule ruht. Insbesondere bei Tischen mit schwankender Belastung, die jedoch gleichzeitig in der Höhe verstellbar sein sollen, kann es zu zu hohen Federkräften oder zu zu geringen Federkräften der Gasdruckfeder kommen. Dies kann passieren, wenn die Feder auf einen Gewichtsbereich eingestellt ist, die Belastung des Tisches dann jedoch deutlich erhöht oder verringert wird. Wird die Belastung auf einen Tisch erhöht, ist also die Gewichtsbelastung auf die Säule bzw. die Gasdruckfeder erhöht, so kann durch Einstellen des Drucks in dem Gasspeicher, beispielsweise durch Einbringen einer Kolbenstange in den Gasspeicher 96, über das Verbindungsmittel 94, der Gasdruck in dem Gasdruckfederabschnitt 91 erhöht werden. So kann eine Anpassung der Federkraft auf die erhöhte Gewichtsbelastung bewirkt werden. Alternativ kann anstelle des Gasspeichers 96 mit Kolbenstange 97 ein Gasspeicher vorgesehen sein, der selbst ein Druckgasbehälter ist, wobei über ein Ventil ein Gasaustausch über das Verbindungsmittel 94 mit dem Gasdruckfederabschnitt 91 der Gasdruckfeder 9 erfolgt.

Zur Realisierung eines erfindungsgemäßen Tisches mit einer Gasdruckfeder 9 ist dabei also notwendig, dass eine Kraftkopplung zwischen der Gasdruckfeder 9 bzw. dem Gasdruckfederabschnitt 91 und dem gewichtbelasteten, in der Höhe zu verstellenden Teil, beispielsweise der Tischplatte, besteht. Dabei kann, wie in der Ausführungsform gemäß Fig. 5 gezeigt ist, der Gasdruckfederabschnitt 91 auch horizontal, also in einer zur Oben-Unten-Richtung senkrechten Ausrichtung angeordnet sein.

Mit einer erfindungsgemäßen Gasdruckfeder kann man somit beispielsweise die Hebeleistung einer Motorsäule steigern. Dies soll an einem die Erfindung in keiner Weise beschränkenden Beispiel verdeutlicht werden. Die Motorleistung kann beispielsweise auf die Belastungsmitte ausgelegt werden. Dabei könnte der Motor beispielsweise auch nicht zum Heben des Tisches angeordnet sein, sondern vielmehr um den Tisch gegen die Gasdruckfeder herabzuziehen. Damit wäre ein beispielhafter Tisch mit zwei Motorsäulen die je 80kg heben können, in der Lage nicht nur 160kg zu heben, sondern, bei zwei 160kg Gasdruckfedern, bis zu 320kg.

Denkbar ist natürlich auch, dass die Motoren zum Heben ausgerichtet sind, wonach zwei 80kg Motoren und zwei 80kg Gasdruckfedern eine Last von 320kg tragen können

Um dies weiter zu steigern kann man die vorliegende Grundlast, also die Tischplatte oder die Anbauteile, mittels Gasdruckfedern ausgleichen. Wenn zum Beispiel eine Motorsäule 80kg heben kann, so können zwei Säulen 160kg heben. Wiegt die Tischplatte beispielsweise eine Tonne, wobei dieses Gewicht durch die Gasdruckfeder oder -federn ausgeglichen wird, so kann der Tisch, wenn für das Anschauungsbeispiel eine Gasdruckfederhysterese etc. unbeachtet bleibt, wiederum mit einem Zusatzgewicht von 160 kg gefahren werden. Die Säulen heben dann 1160kg. Die freie Einstellung der hier genutzten erfindungsgemäßen Gasfeder macht somit den wechselnden Einsatz von Tischen auch noch beim Endkunden möglich. Dies kann vor allem in der Anwendung in der Industrie mit sehr hohen Gewichten und langer Benutzung der Tische, beispielsweise auch in unterschiedlichen Fertigungslinien, vorteilhaft eingesetzt werden.

Zusammenfassend weist eine einstellbare Gasdruckfeder 9 einen Gasfederabschnitt 91, 92, einen Gasspeicher 96 und ein Verbindungsmittel 94 auf, das den Gasspeicher 96 und den Gasfederabschnitt 91, 92 fluidisch miteinander verbindet. Die Federkraft des Gasfederabschnitts 91, 92 ist dabei mittels eines Druckausgleichs mit dem Gasspeicher 96 und/oder dem Umgebungsdruck einstellbar. Eine solche Gasfeder kann in einer verstellbaren Säule 10, 104, 105, insbesondere einer verstellbaren Tischsäule, vorgesehen sein. Eine derartige Tischsäule kann wiederum in einem höhenverstellbaren Tisch 1, 101 vorgesehen sein.

### Bezugszeichenliste

- 1: Tisch
- 2: Tischplatte
- 3: Tischrahmen
- 9: Gasdruckfeder
- 10: verstellbare Säule
- 11: unteres Säulenelement
- 12: oberes Säulenelement
- 13: mittleres Säulenelement
- 14: Anschlag
- 20: Verstelleinheit
- 24: Antriebsmotor
- 25: Gewindespindel
- 26: Mittleres Teleskopteil
- 27: Oberes Teleskopteil
- 28: Unteres Teleskopteil
- 91: Zylinder
- 92: Kolben
- 93: Zylinderventil
- 94: Verbindungsmittel
- 95: Ventil
- 96: Gasspeicher
- 97: Kolbenstange
- 102: Tischplattenhaltebauteil
- 103: Fußbauteil
- 104: Vertikales Element
- 105: Vertikaler Träger
- 106: Stahlband
- 107: Stahlband
- 108: Umlenkrolle
- 109: Umlenkrolle
- 110: Umlenkrolle
- 111: Umlenkrolle
- 112: Umlenkrolle
- 113: Umlenkrolle
- 114: Quertraverse
- 120: Verbindungsmittel
- 121: Bandschloss

## Patentansprüche

1. Höhenverstellbarer Tisch (1; 101) mit wenigstens einer Säule (10; 104, 105)), insbesondere Tischsäule, sowie einer Tischplatte (2), die oberhalb der wenigstens einer Säule (10, 104, 105) angeordnet ist, aufweisend wenigstens ein unteres Säulenelement (11) und ein oberes Säulenelement (12), wobei die Säulenelemente (11, 12) relativ zueinander bewegbar sind, und wenigstens eine einstellbare Gasdruckfeder (9) aufweisend einen Gasfederabschnitt (91, 92), einen Gasspeicher (96) und ein Verbindungsmittel (94), das den Gasspeicher (96) und den Gasfederabschnitt (91, 92) fluidisch miteinander verbindet, wobei die Federkraft des Gasfederabschnitts (91, 92) mittels eines Druckausgleichs mit dem Gasspeicher (96) und/oder dem Umgebungsdruck einstellbar und derart angeordnet ist, dass die Federkraft der Gasdruckfeder (9) einer Gewichtsbelastung auf die Säule (10, 104, 105) entgegengerichtet ist, **dadurch gekennzeichnet, dass**
der Tisch mit wenigstens einem Synchronisierungsmittel (106, 107), insbesondere einem Bandsynchronisierungsmittel, vorgesehen ist, das die Höhenverstellung einer Mehrzahl von Säulen (10; 104, 105), insbesondere auch zwischen einer oder mehreren Säulen (10; 104, 105) mit einstellbarer Gasfeder und einer oder mehrerer Säulen (10; 104, 105) mit nichteinstellbarer Gasfeder, synchronisiert.

2. Höhenverstellbarer Tisch (1; 101) gemäß einem der vorherigen Ansprüche,
wobei an dem Tisch (1; 101) und/oder an der verstellbaren Säule (10; 104, 105) ein Gewichtsmesser und/oder ein Gewichtsindikator vorgesehen ist, zum Messen und/oder Darstellen der tatsächlichen Gewichtsbelastung des Tisches (1; 101) .

3. Höhenverstellbarer Tisch (1; 101) gemäß einem der vorherigen Ansprüche,
wobei an dem Tisch (1; 101) und/oder an der verstellbaren Säule (10; 104, 105) und/oder an der Gasdruckfeder (9) ein Indikator zum Anzeigen des Drucks in der Gasdruckfeder (9) bzw. des eingestellten Gewichtsausgleichs vorgesehen ist.

4. Höhenverstellbarer Tisch (1; 101) gemäß einem der vorherigen Ansprüche,
wobei an dem Tisch (1; 101) und/oder der verstellbaren Säule (10; 104, 105) und/oder der Gasdruckfeder (9) ein Indikator vorgesehen ist, der eine tatsächliche Gewichtsbelastung des Tisches (1; 101) und des eingestellten Gewichtsausgleichs, insbesondere in einer gemeinsamen Anzeige, anzeigt.

5. Höhenverstellbarer Tisch (1; 101) gemäß einem der vorherigen Ansprüche,
wobei ein Sicherungsmittel an dem Tisch vorgesehen ist, das derart ausgebildet ist, dass ein Verstellen der Säule nur möglich ist, wenn eine Gewichtsausgleichseinstellung der Gasdruckfeder und eine Gewichtsbelastung des Tisches ausreichend ähnlich sind.

6. Höhenverstellbarer Tisch (1; 101) gemäß einem der vorherigen Ansprüche,
wobei der Tisch des Weiteren ein Rastmittel aufweist, das so ausgebildet ist, dass die Position der Tischplatte in einer vertikalen Richtung arretierbar ist.

7. Höhenverstellbarer Tisch (1; 101) gemäß Anspruch 6,
wobei das Rastmittel der Tischsäule zur Arretierung der Position der Tischplatte (2) das Synchronisierungsmittel (106, 107), insbesondere die Bandsynchronisierung, arretiert.

8. Höhenverstellbarer Tisch (1; 101) gemäß Anspruch 6 oder Anspruch 7,
wobei das Rastmittel mit der Gasdruckfeder (9) gekoppelt ist.

9. Höhenverstellbarer Tisch (1; 101) gemäß einem der vorherigen Ansprüche,
wobei der Gasspeicher ein Einstellmittel aufweist, durch welches der Druck in dem Gasspeicher einstellbar ist.

10. Höhenverstellbarer Tisch (1; 101) gemäß Anspruch 9,
wobei die Federkraft der Gasdruckfeder regulierbar und/oder nachstellbar und/oder voreinstellbar mittels des Einstellmittels und/oder des Anschließens eines externen Gasspeichers ist.

11. Höhenverstellbarer Tisch (1; 101) gemäß Anspruch 10,
wobei der externe Gasspeicher als externe Gasdruckflasche ausgeführt ist, welche über Verbindungsmittel reversibel mit dem Gasfederabschnitt der Gasdruckfeder verbindbar ist.

12. Höhenverstellbarer Tisch (1; 101) gemäß einem der Ansprüche 9 bis 11,
wobei das Einstellmittel einen in den Gasspeicher eindringbaren Kolben aufweist.

13. Höhenverstellbarer Tisch (1; 101) gemäß einem der Ansprüche 9 bis 12,
wobei das Einstellmittel mit einer Kurbel und/oder einem Schraubendreher und/oder einem Akkuschrauber und/oder einem anderen Schraub- bzw. Eingriffsmittel einstellbar ist.

## Claims

1. Height-adjustable table (1; 101) having at least one column (10; 104, 105), in particular table column, as well as a table plate (2), which is arranged above the at least one column (10, 104, 105), comprising at least one lower column element (11) and an upper column element (12), wherein the column elements (11, 12) are movable relative to each other, and at least one adjustable gas pressure spring (9) comprising a gas spring portion (91, 92), a gas reservoir (96) and connecting means (94), which fluidically connects the gas reservoir (96) and the gas spring portion (91, 92) together, wherein the spring force of the gas spring portion (91, 92) is adjustable by means of pressure equalisation with the gas reservoir (96) and/or to ambient pressure and is arranged such that the spring force of the gas pressure spring (9) counteracts a weight force on the column (10, 104, 105), **characterised in that** the table is provided with at least one synchronisation means (106, 107), in particular belt synchronisation means, which synchronises the height adjustment of a plurality of pillars (10; 104, 105), in particular also between one or a plurality of pillars (10; 104, 105) with adjustable gas spring and one or a plurality of pillars (10; 104, 105) with non-adjustable gas spring.

2. Height-adjustable table (1; 101) according to the preceding claim,
wherein a weight meter and/or a weight indicator is provided on the table (1; 101) and/or on the adjustable column (10; 104, 105) for measuring and/or displaying the actual weight load of the table (1; 101).

3. Height-adjustable table (1; 101) according to any one of the preceding claims,
wherein an indicator for displaying the pressure in the gas pressure spring (9) or the adjusted weight compensation is provided on the table (1; 101) and/or on the adjustable column (10; 104, 105) and/or on the gas pressure spring (9).

4. Height-adjustable table (1; 101) according to any one of the preceding claims,
wherein an indicator is provided on the table (1; 101) and/or the adjustable column (10; 104, 105) and/or the gas pressure spring (9), which indicates an actual weight load of the table (1; 101) and the adjusted weight compensation, in particular in a common display.

5. Height-adjustable table (1; 101) according to any one of the preceding claims,
wherein a securing means is provided on the table, which is designed such that an adjustment of the columns is only possible if a weight compensation adjustment of the gas pressure spring and a weight load of the table are sufficiently similar.

6. Height-adjustable table (1; 101) according to any one of the preceding claims,
wherein the table furthermore comprises a locking means, which is configured such that the position of the table plate can be locked in a vertical direction.

7. Height-adjustable table (1; 101) according to claim 6,
wherein the locking means of the table column locks the synchronisation means (106, 107), in particular the belt synchronisation means, to lock the position of the table plate (2).

8. Height-adjustable table (1; 101) according to claim 6 or 7, wherein the locking means is coupled to the gas pressure spring (9).

9. Height-adjustable table (1; 101) according to any one of the preceding claims,
wherein the gas reservoir comprises an adjusting means by which the pressure in the gas reservoir can be adjusted.

10. Height-adjustable table (1; 101) according to claim 9,
wherein the spring force of the gas pressure spring can be adjusted and/or re-adjusted and/or pre-adjusted by means of the adjusting means and/or the connection of an external gas reservoir.

11. Height-adjustable table (1; 101) according to claim 10,
wherein the external gas reservoir is configured as an external pressurised gas cylinder, which is reversibly connectable to the gas spring portion of the gas pressure spring via connecting means.

12. Height-adjustable table (1; 101) according to any one of claims 9 to 11,
wherein the adjusting means comprises a piston insertable into the gas reservoir.

13. Height-adjustable table (1; 101) according to any one of claims 9 to 12,
wherein the adjusting means is adjustable with a crank and/or a screwdriver and/or a battery-powered screwdriver and/or other screwing or engaging means.

## Revendications

1. Plateau (1 ; 101) ajustable en hauteur avec au moins une colonne (10 ; 104, 105), en particulier une colonne de plateau, ainsi qu'un panneau de plateau (2), qui est disposé au-dessus de l'au moins une colonne (10, 104, 105), présentant
au moins un élément de colonne (11) inférieur et un élément de colonne (12) supérieur, dans lequel les éléments de colonne (11, 12) peuvent être déplacés l'un par rapport à l'autre, et au moins un ressort à pression de gaz (9) réglable présentant une section de ressort à gaz (91, 92), un accumulateur de gaz (96) et un moyen de liaison (94), qui relie de manière fluidique l'accumulateur de gaz (96) et la section de ressort à gaz (91, 92) l'un à l'autre, dans lequel la force de ressort de la section de ressort à gaz (91, 92) peut être réglée au moyen d'une compensation de pression avec l'accumulateur de gaz (96) et/ou avec la pression ambiante et est disposée de telle manière que la force de ressort du ressort à pression de gaz (9) s'oppose à une contrainte exercée par le poids sur la colonne (10, 104, 105), **caractérisé en ce que**
le plateau est prévu avec au moins un moyen de synchronisation (106, 107), en particulier un moyen de synchronisation de bande, qui synchronise l'ajustement en hauteur d'une multitude de colonnes (10 ; 104, 105), en particulier également entre une ou plusieurs colonnes (10; 104, 105) avec un ressort à gaz réglable et une ou plusieurs colonnes (10 ; 104, 105) avec un ressort à gaz non réglable.

2. Plateau (1 ; 101) ajustable en hauteur selon la revendication précédente,
dans lequel un système de mesure de poids et/ou un indicateur de poids servant à mesurer et/ou à représenter la contrainte réelle exercée par le poids du plateau (1 ; 101) sont prévus au niveau du plateau (1 ; 101) et/ou au niveau de la colonne (10 ; 104, 105) ajustable.

3. Plateau (1 ; 101) ajustable en hauteur selon l'une quelconque des revendications précédentes,
dans lequel un indicateur servant à afficher la pression dans le ressort à pression de gaz (9) ou la compensation de poids réglée est prévu au niveau du plateau (1 ; 101) et/ou au niveau de la colonne (10; 104, 105) ajustable et/ou au niveau du ressort à pression de gaz (9).

4. Plateau (1 ; 101) ajustable en hauteur selon l'une quelconque des revendications précédentes,
dans lequel un indicateur, qui affiche une contrainte réelle exercée par le poids du plateau (1 ; 101) et la compensation de poids réglée, en particulier sur un système d'affichage commun, est prévu au niveau du plateau (1 ; 101) et/ou au niveau de la colonne (10 ; 104, 105) ajustable et/ou au niveau du ressort à pression de gaz (9).

5. Plateau (1 ; 101) ajustable en hauteur selon l'une quelconque des revendications précédentes,
dans lequel un moyen de blocage est prévu au niveau du plateau, lequel est réalisé de telle manière qu'un ajustement de la colonne n'est possible que si un réglage de compensation de poids du ressort à pression de gaz et une contrainte exercée par le poids du plateau sont suffisamment similaires.

6. Plateau (1 ; 101) ajustable en hauteur selon l'une quelconque des revendications précédentes,
dans lequel le plateau présente par ailleurs un moyen d'enclenchement, qui est réalisé de telle sorte que la position du panneau de plateau peut être arrêtée dans une direction verticale.

7. Plateau (1 ; 101) ajustable en hauteur selon la revendication 6,
dans lequel le moyen d'enclenchement de la colonne de plateau servant à arrêter la position du panneau de plateau (2) arrête le moyen de synchronisation (106, 107), en particulier le système de synchronisation de bande.

8. Plateau (1 ; 101) ajustable en hauteur selon la revendication 6 ou la revendication 7,
dans lequel le moyen d'enclenchement est couplé au ressort à pression de gaz (9).

9. Plateau (1 ; 101) ajustable en hauteur selon l'une quelconque des revendications précédentes,
dans lequel l'accumulateur de gaz présente un moyen de réglage, par lequel la pression dans l'accumulateur de gaz peut être réglée.

10. Plateau (1 ; 101) ajustable en hauteur selon la revendication 9,
dans lequel la force de ressort du ressort à pression de gaz peut être régulée et/ou réglée ultérieurement et/ou réglée au préalable au moyen du moyen de réglage et/ou au moyen du raccordement d'un accumulateur de gaz externe.

11. Plateau (1 ; 101) ajustable en hauteur selon la revendication 10,
dans lequel l'accumulateur de gaz est réalisé sous la forme d'une bouteille à pression de gaz, qui peut être reliée de manière réversible à la section de ressort à gaz du ressort à pression de gaz par l'intermédiaire de moyens de liaison.

12. Plateau (1; 101) ajustable en hauteur selon l'une quelconque des revendications 9 à 11,
dans lequel le moyen de réglage présente un piston pouvant être introduit dans l'accumulateur de gaz.

13. Plateau (1; 101) ajustable en hauteur selon l'une quelconque des revendications 9 à 12,
dans lequel le moyen de réglage peut être réglé avec une manivelle et/ou avec un tournevis et/ou une visseuse sans fil et/ou tout autre moyen de vissage ou de mise en prise.
